# DEMANDE DE BREVET EUROPEEN

(11) **EP 3 575 209 A1**
(43) Date de publication de la demande: **04.12.2019**
(21) Numéro de dépôt: 19173694.1
(22) Date de dépôt: 10.05.2019
(51) Int. Cl.: B64C 23/06, B64D 29/02

(54) **AÉRONEF COMPRENANT UNE PAROI AÉRODYNAMIQUE ET AU MOINS UN GÉNÉRATEUR DE TOURBILLONS**

(30) Priorité: 30.05.2018 FR 1854656
(71) Demandeur: Airbus Operations, 31060 Toulouse (FR)
(72) Inventeur: BAS, Adrien, 31200 Toulouse (FR); BOURDIEU, Thomas, 31330 Launac (FR); KRIER, Erwan, 31470 Fonsorbes (FR); DE OLIVEIRA, Grégory, 31140 SAINT ALBAN (FR)
(74) Mandataire: Fantin, Laurent

(57) **Abrégé**

L'invention a pour objet un aéronef comprenant une paroi aérodynamique (42) présentant des surfaces externe et interne (42.1, 42.2) et au moins générateur de tourbillons (40) qui comprend :
- au moins une paroi active (46) en saillie par rapport à la surface externe (42.1) de la paroi aérodynamique (42),
- un système de liaison (48) reliant le générateur de tourbillons (40) à la paroi aérodynamique (42) qui comporte :
∘ au moins un support (50) présentant une base (52) plaquée contre la surface interne (42.2) de la paroi aérodynamique (42) et une tête (54) qui traverse la paroi aérodynamique (42) et coopère avec la paroi active (46),
∘ au moins un premier élément de fixation (56) reliant la base (52) du support (50) et la paroi aérodynamique (42),
∘ au moins un deuxième élément de fixation (58) reliant la tête (54) du support (50) et la paroi active (46).

Cette configuration permet de limiter l'apparition d'une traînée parasite.

## Description

La présente demande se rapporte à un aéronef comprenant une paroi aérodynamique et au moins un générateur de tourbillons.

Comme illustré sur les figures, un aéronef 10 comprend plusieurs ensembles propulsifs 12 qui présentent chacun une nacelle 14 entourant une motorisation. La nacelle 14 comprend au moins une paroi aérodynamique 16, comme par exemple un capot, comportant au moins un générateur de tourbillons 18 également appelé aileron, aigrette (ou strake en anglais).

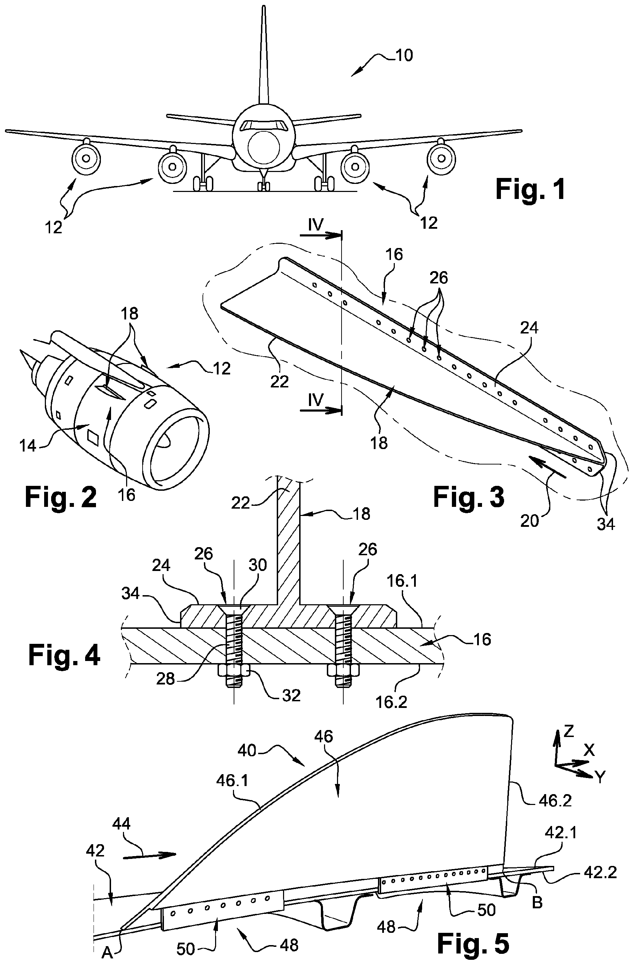

Selon un mode de réalisation visible sur les figures 3 et 4, la paroi aérodynamique 16 présente une surface externe 16.1 orientée vers l'extérieur de la nacelle 14 contre laquelle s'écoule un flux d'air 20 et une surface interne 16.2 orientée vers l'intérieur de la nacelle 14. Le générateur de tourbillons 18 comprend une section transversale en T et présente une paroi active 22ainsi qu'une embase 24 en saillie par rapport à la surface externe 16.1 de la paroi aérodynamique 16 et reliée à cette dernière par des éléments de fixation 26.

L'embase 24 s'étend de part et d'autre de la paroi active 22 et les éléments de fixation 26 sont agencés selon deux rangées disposées de part et d'autre de la paroi active 22. Pour chaque élément de fixation 26, l'embase 24 et la paroi aérodynamique 16 comprennent chacune un trou traversant, le trou traversant de l'embase 24 présentant un chanfrein. En complément, chaque élément de fixation 26 comprend une tige 28 logée dans les trous traversants de l'embase 24 et de la paroi aérodynamique 16, une tête fraisée 30 logée au niveau du chanfrein du trou traversant de l'embase 24 ainsi qu'un système de blocage 32, comme un écrou par exemple, relié à la tige 28 et plaqué contre la paroi aérodynamique 16.

Les générateurs de tourbillons 18, positionnés de part et d'autre du mât au niveau du capot de la nacelle, permettent d'obtenir un gain en matière aérodynamique, notamment en retardant le décollement du flux d'air sur l'extrados de l'aile et en augmentant la portance durant les phases d'atterrissage.

Cependant, l'embase 24 du générateur de tourbillons présente un chant avant 34, en saillie par rapport à la surface externe 16.1 de la paroi aérodynamique 16, qui perturbe le flux d'air et génère une traînée parasite.

La présente invention vise à remédier à tout ou partie des inconvénients de l'art antérieur.

A cet effet, l'invention a pour objet un aéronef comprenant une paroi aérodynamique et au moins un générateur de tourbillons, ladite paroi aérodynamique présentant une surface externe sur laquelle s'écoule un flux d'air en vol et une surface interne opposée à la surface externe, le générateur de tourbillons comprenant au moins une paroi active en saillie par rapport à la surface externe de la paroi aérodynamique et un système de liaison reliant le générateur de tourbillons et la paroi aérodynamique.

Selon l'invention, le système de liaison comprend :
- au moins un support présentant une base plaquée contre la surface interne de la paroi aérodynamique et une tête qui traverse la paroi aérodynamique, la tête du support et la paroi active ayant des formes qui coopèrent de manière à s'emboîter l'une dans l'autre,
- au moins un premier élément de fixation reliant la base du support et la paroi aérodynamique,
- au moins un deuxième élément de fixation reliant la tête du support et la paroi active, maintenant la paroi active et la tête du support dans une position emboîtée l'une dans l'autre.

L'invention permet d'éviter l'apparition de traînées parasites, avec un impact négligeable sur la masse embarquée et le temps d'assemblage.

Selon une autre caractéristique, la paroi aérodynamique comprend, pour chaque support, une découpe configurée pour loger la tête du support, la découpe et la tête du support ayant des contours identiques à un jeu de montage près, ledit jeu de montage comprenant un joint ou mastic affleurant la surface externe) de la paroi aérodynamique.

Selon une autre caractéristique, chaque support présente une section transversale en T, la base comprenant des première et deuxième parties disposées de part et d'autre de la tête, le système de liaison comprenant une première série de premiers éléments de fixation disposés au niveau de la première partie de la base et une deuxième série de premiers éléments de fixation disposés au niveau de la deuxième partie de la base.

Selon une autre caractéristique, les premiers éléments de fixation sont de type affleurant au niveau de la surface externe de la paroi aérodynamique.

Selon un premier mode de réalisation, la paroi active comprend un bord, orienté vers la paroi aérodynamique, qui présente au moins une feuillure et la tête de chaque support comprend au moins une languette configurée pour se loger dans la feuillure, la languette et la feuillure ayant des épaisseurs identiques.

Selon une configuration, la paroi active comprend, de part et d'autre de chaque feuillure, des première et deuxième branches et la tête du support comprend, de part et d'autre de chaque languette des première et deuxième butées, la languette et la feuillure étant dimensionnées de manière à ce que les extrémités des première et deuxième branches soient en contact avec les première et deuxième butées lorsque la languette est insérée dans la feuillure.

Selon un deuxième mode de réalisation, la tête de chaque support présente une feuillure configurée pour loger un bord de la paroi active, orienté vers la paroi aérodynamique, la paroi active et la feuillure ayant des épaisseurs identiques.

Selon une autre caractéristique, le système de liaison comprend plusieurs deuxièmes éléments de fixation de type affleurant.

D'autres caractéristiques et avantages ressortiront de la description de l'invention qui va suivre, description donnée à titre d'exemple uniquement, en regard des dessins annexés parmi lesquels :
- La figure 1 est une vue de face d'un aéronef,
- la figure 2 est une vue en perspective d'un ensemble propulsif de l'aéronef visible sur la figure 1,
- la figure 3 est une vue en perspective d'une partie d'une nacelle équipée d'un générateur de tourbillons qui illustre un mode de réalisation de l'art antérieur,
- la figure 4 est une coupe selon la ligne IV-IV de la figure 3,
- la figure 5 est une représentation schématique d'un générateur de tourbillons qui illustre un mode de réalisation de l'invention,
- la figure 6 est une coupe transversale d'une partie d'une paroi d'une nacelle d'aéronef équipée d'un générateur de tourbillons qui illustre un premier mode de réalisation de l'invention, et
- la figure 7 est une coupe transversale d'une partie d'une paroi d'une nacelle d'aéronef équipée d'un générateur de tourbillons qui illustre un deuxième mode de réalisation de l'invention.

Sur les figures 5 à 7, on a représenté en 40 un générateur de tourbillons positionné sur une paroi aérodynamique 42 d'une nacelle d'aéronef.

Bien que décrite appliquée à une nacelle d'aéronef, l'invention n'est aucunement limitée à cette application et peut être appliquée à toute paroi aérodynamique d'un aéronef, comme par exemple un fuselage, un empennage, une aile, un mât, une nacelle.

Une paroi aérodynamique 42 peut comprendre une unique plaque ou plusieurs plaques juxtaposées.

La paroi aérodynamique 42 présente une surface externe 42.1 contre laquelle s'écoule un flux d'air 44 en vol et une surface interne 42.2 opposée à la surface externe 42.1.

Pour la suite de la présente demande, les termes avant et arrière font référence au sens de l'écoulement du flux d'air 44, ce dernier s'écoulant en vol de l'avant vers l'arrière.

Par un générateur de tourbillons, on entend toute paroi en saillie par rapport à une paroi aérodynamique d'un aéronef, configurée pour modifier un flux d'air s'écoulant à la surface de cette paroi aérodynamique. Un générateur de tourbillons est également appelé aileron, aigrette ou « strake » en anglais.

Selon différents modes de réalisation visibles sur les figures 5 à 7, le générateur de tourbillons 40 comprend au moins une paroi active 46, sensiblement plane, en saillie par rapport à la surface externe 42.1 de la paroi aérodynamique 42. Cette paroi active 46 comprend un bord d'attaque 46.1 et un bord de fuite 46.2. Le générateur de tourbillons 40 comprend une extrémité avant A et une extrémité arrière B, positionnées au niveau de la surface externe 42.1 de la paroi aérodynamique 42 lorsque le générateur de tourbillons 40 est monté.

Selon une configuration, la paroi active 46 a approximativement la forme d'un triangle. Ainsi, le bord d'attaque 46.1 comprend une première extrémité avant, positionnée au niveau de la surface externe 42.1 de la paroi aérodynamique 42, et une deuxième extrémité arrière reliée au bord de fuite 46.2 et écartée de la surface externe 42.1 de la paroi aérodynamique 42.

Bien entendu, l'invention n'est pas limitée à cette configuration.

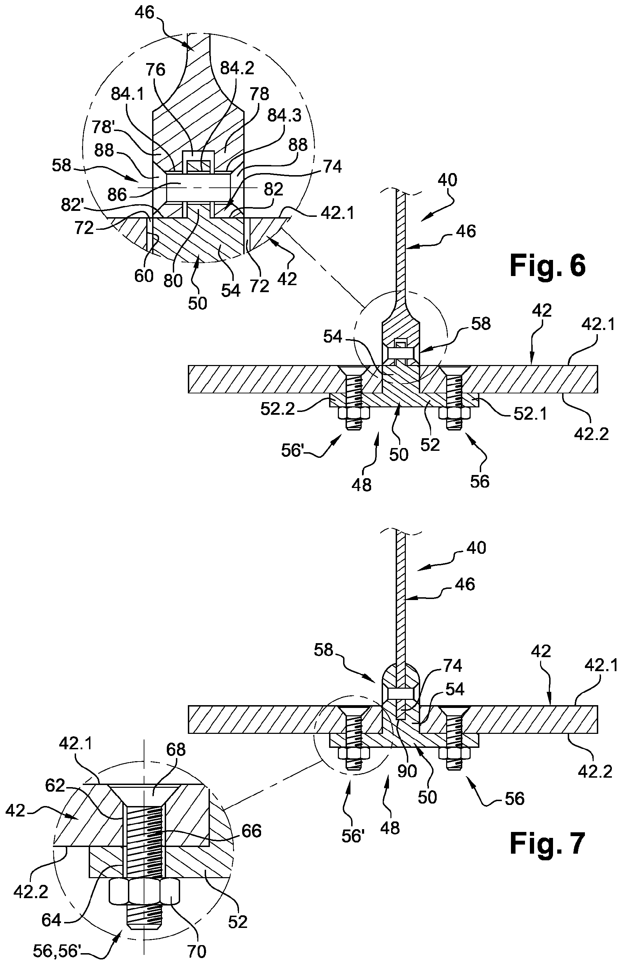

Selon un premier mode de réalisation visible sur la figure 6, le générateur de tourbillons 40 comprend un système de liaison 48 prévu pour relier la paroi active 46 et la surface interne 42.2 de la paroi aérodynamique 42.

Ce système de liaison 48 comprend :
- au moins un support 50 présentant une base 52 plaquée contre la surface interne 42.2 de la paroi aérodynamique 42 et une tête 54 qui traverse la paroi aérodynamique 42,
- au moins un premier élément de fixation 56 reliant la base 52 du support 50 et la paroi aérodynamique 42,
- au moins un deuxième élément de fixation 58 reliant la tête 54 du support 50 et la paroi active 46.

Le système de liaison 48 comprend un seul support 50 ou, comme illustré sur la figure 5, plusieurs supports 50 répartis sur la longueur du générateur de tourbillons 40 (la longueur correspondant à la dimension du générateur de tourbillons entre les première et deuxième extrémités A et B).

En complément, la paroi aérodynamique 42 comprend, pour chaque support 50, une découpe 60 configurée pour loger la tête 54 du support 50, la découpe 60 et la tête 54 du support 50 ayant des contours identiques à un jeu de montage près.

Selon une configuration, chaque support 50 présente une section transversale en T, la base 52 comprenant des première et deuxième parties 52.1, 52.2 disposées de part et d'autre de la tête 54.

Le système de liaison 54 comprend une première série de premiers éléments de fixation 56, disposés au niveau de la première partie 52.1 de la base 52, et une deuxième série de premiers éléments de fixation 56' disposés au niveau de la deuxième partie 52.2 de la base 52.

Comme illustré sur la figure 7, pour chaque premier élément de fixation 56, 56', la paroi aérodynamique 42 comprend un trou traversant 62 qui présente un chanfrein au niveau de la surface externe 42.1 de la paroi aérodynamique 42 et la base 52 comprend un trou traversant 64. En complément, chaque premier élément de fixation 56, 56' comprend une tige 66 logée dans les trous traversants 62, 64 de la paroi aérodynamique 42 et de la base 52, une tête fraisée 68 logée au niveau du chanfrein du trou traversant 62 de la paroi aérodynamique 42 ainsi qu'un système de blocage 70, comme un écrou par exemple, relié à la tige 66 et plaqué contre la base 52.

Les premiers éléments de fixation 56, 56' sont de type affleurant au niveau de la surface externe 42.1 de la paroi aérodynamique 42 et ne perturbent quasiment pas le flux d'air 44.

Pour améliorer les caractéristiques aérodynamiques, le jeu de montage entre la découpe 60 et la tête 54 du support 50 et/ou la paroi active 46 comprend un joint ou mastic 72 affleurant la surface externe 42.1 de la paroi aérodynamique 42.

Selon le premier mode de réalisation, la paroi active 46 comprend un bord 74, orienté vers la paroi aérodynamique 42, qui présente au moins une feuillure 76.

Selon les cas, le bord 74 présente une unique feuillure 76 qui s'étend sur toute la longueur ou plusieurs feuillures 76 disjointes configurées pour recevoir, au moins partiellement, la tête 54 de chaque support 50.

La paroi active 46 comprend, de part et d'autre de chaque feuillure 76, des première et deuxième branches 78, 78'. En complément, la tête 54 de chaque support 50 présente au moins une languette 80 configurée pour se loger dans la feuillure 76 et des première et deuxième butées 82, 82' de part et d'autre de chaque languette 80.

La languette 80 et la feuillure 76 ont des épaisseurs identiques. De plus, la languette 80 et la feuillure 76 sont dimensionnées de manière à ce que les extrémités des première et deuxième branches 78, 78' soient en contact avec les première et deuxième butées 82, 82' lorsque la languette 80 est insérée dans la feuillure 76.

Le système de liaison 48 comprend plusieurs deuxièmes éléments de fixation 58 pour maintenir la languette 80 dans la feuillure 76 et immobiliser la partie active 46 par rapport à la paroi aérodynamique 42. Ces deuxièmes éléments de fixation 58 sont alignés parallèlement à la paroi aérodynamique 42.

Pour chaque deuxième élément de fixation 58, la première branche 78, la languette 80 et la deuxième branche 78' présentent des trous traversants 84.1, 84.2, 84.3, les trous traversants 84.1, 84.3 des première et deuxième branches 78, 78' étant chanfreinés. En complément, chaque deuxième éléments de fixation 58 comprend une tige 86 qui se loge dans les trous traversants 84.1, 84.2, 84.3 et, à chaque extrémité de la tige 86, des têtes fraisées 88 logées dans les chanfreins des trous traversants 84.1, 84.3 des première et deuxième branches 78, 78'.

Les deuxièmes éléments de fixation 58 sont de type affleurant et ne perturbent quasiment pas le flux d'air 44.

Selon un deuxième mode de réalisation visible sur les figures 5 et 7, la tête 54 de chaque support 50 présente une feuillure 90 configurée pour loger le bord 74 de la paroi active 46.

La paroi active 46 et la feuillure 96 ont des épaisseurs identiques.

Le système de liaison 48 comprend plusieurs deuxièmes éléments de fixation 58 pour maintenir la paroi active 46 dans la feuillure 90 de la tête 54 du support 50 et immobiliser la partie active 46 par rapport à la paroi aérodynamique 42. Ces deuxièmes éléments de fixation 58 sont alignés parallèlement à la paroi aérodynamique 42.

Comme pour le premier mode de réalisation, les deuxièmes éléments de fixation 58 sont de type affleurant et ne perturbent quasiment pas le flux d'air 44.

Quel que soit le mode de réalisation, la tête 54 du support 50 et la paroi active 46 ont des formes qui coopèrent de manière à s'emboîter l'une dans l'autre, les deuxièmes éléments de fixation 58 permettant d'immobiliser la paroi active 46 par rapport au support 50 dans une position emboîtée l'une dans l'autre. Le support 50 étant positionné à l'intérieur de la paroi aérodynamique, il ne génère aucune traînée parasite.

L'invention permet d'éviter l'apparition d'une traînée parasite présente dans le cas des générateurs de tourbillons de l'art antérieur, avec un impact négligeable sur la masse embarquée et le temps d'assemblage.

## Revendications

1. Aéronef comprenant une paroi aérodynamique (42) et au moins un générateur de tourbillons (40), ladite paroi aérodynamique (42) présentant une surface externe (42.1) sur laquelle s'écoule un flux d'air (44) en vol et une surface interne (42.2) opposée à la surface externe (42.1), le générateur de tourbillons (40) comprenant au moins une paroi active (46) en saillie par rapport à la surface externe (42.1) de la paroi aérodynamique (42) et un système de liaison (48) reliant le générateur de tourbillons (40) et la paroi aérodynamique (42), **caractérisé en ce que** le système de liaison (48) comprend :
- au moins un support (50) présentant une base (52) plaquée contre la surface interne (42.2) de la paroi aérodynamique (42) et une tête (54) qui traverse la paroi aérodynamique (42), la tête (54) du support (50) et la paroi active (46) ayant des formes qui coopèrent de manière à s'emboîter l'une dans l'autre,
- au moins un premier élément de fixation (56) reliant la base (52) du support (50) et la paroi aérodynamique (42),
- au moins un deuxième élément de fixation (58) reliant la tête (54) du support (50) et la paroi active (46), maintenant la paroi active (46) et la tête (54) du support (50) dans une position emboîtée l'une dans l'autre.

2. Aéronef selon la revendication 1, **caractérisé en ce que** la paroi aérodynamique (42) comprend, pour chaque support (50), une découpe (60) configurée pour loger la tête (54) du support (50), la découpe (60) et la tête (54) du support (50) ayant des contours identiques à un jeu de montage près, ledit jeu de montage comprenant un joint ou mastic (72) affleurant la surface externe (42.1) de la paroi aérodynamique (42).

3. Aéronef selon la revendication 1 ou 2, **caractérisé en ce que** chaque support (50) présente une section transversale en T, la base (52) comprenant des première et deuxième parties (52.1, 52.2) disposées de part et d'autre de la tête (54) et **en ce que** le système de liaison (54) comprend une première série de premiers éléments de fixation (56) disposés au niveau de la première partie (52.1) de la base (52) et une deuxième série de premiers éléments de fixation (56') disposés au niveau de la deuxième partie (52.2) de la base (52).

4. Aéronef selon l'une des revendications précédentes, **caractérisé en ce que** les premiers éléments de fixation (56, 56') sont de type affleurant au niveau de la surface externe (42.1) de la paroi aérodynamique (42).

5. Aéronef selon l'une des revendications précédentes, **caractérisé en ce que** la paroi active (46) comprend un bord (74), orienté vers la paroi aérodynamique (42), qui présente au moins une feuillure (76) et **en ce que** la tête (54) de chaque support (50) comprend au moins une languette (80) configurée pour se loger dans la feuillure (76), la languette (80) et la feuillure (76) ayant des épaisseurs identiques.

6. Aéronef selon la revendication précédente, **caractérisé en ce que** la paroi active (46) comprend, de part et d'autre de chaque feuillure (76), des première et deuxième branches (78, 78') et **en ce que** la tête (54) du support (50) comprend, de part et d'autre de chaque languette (80), des première et deuxième butées (82, 82'), la languette (80) et la feuillure (76) étant dimensionnées de manière à ce que les extrémités des première et deuxième branches (78, 78') soient en contact avec les première et deuxième butées (82, 82') lorsque la languette (80) est insérée dans la feuillure (76).

7. Aéronef selon l'une des revendications 1 à 4, **caractérisé en ce que** la tête (54) de chaque support (50) présente une feuillure (90) configurée pour loger un bord (74) de la paroi active (46), orienté vers la paroi aérodynamique (42), la paroi active (46) et la feuillure (96) ayant des épaisseurs identiques.

8. Aéronef selon l'une des revendications précédentes, **caractérisé en ce que** le système de liaison (48) comprend plusieurs deuxièmes éléments de fixation (58) de type affleurant.
